# EUROPÄISCHE PATENTSCHRIFT

(11) **EP 0 563 526 B1**
(45) Veröffentlichungstag und Bekanntmachung des Hinweises auf die Patenterteilung: **19.07.1995**
(21) Anmeldenummer: 93101272.8
(22) Anmeldetag: 28.01.1993
(51) Int. Cl.: B62D 33/06

(54) **Fahrerhaus-Baureihe bei Lastkraftwagen**
Modular construction for driver's cabs of trucks
Système de construction par gammes pour cabines de conducteur de camions

(30) Priorität: 25.03.1992 DE 4209662
(43) Veröffentlichungstag der Anmeldung: 06.10.1993
(73) Patentinhaber: MAN Nutzfahrzeuge Aktiengesellschaft, 80976 München (DE)
(72) Erfinder: Schubert, Klaus, Dr., W-8031 Wessling (DE); Kneifel, Eberhard, Dipl.-Ing., W-7913 Senden (DE); Kraus, Wolfgang, Prof. Dipl.-Designer, W-8000 München 50 (DE); Watzek, Gerhard, W-8000 München 45 (DE); Rieck, Gerhard, Dipl.-Ing., W-8000 München 60 (DE); Koch, Erich, W-8047 Karlsfeld (DE)

(56) Entgegenhaltungen:
- EP-A- 0 254 689
- EP-A- 0 374 488
- DE-A- 3 429 880
- DE-A- 3 617 961
- FR-A- 2 362 041
- FR-A- 2 455 542
- GB-A- 1 175 746

## Beschreibung

Die Erfindung bezieht sich auf Fahrerhaus-Baureihen modularen Aufbaus bei Lastkraftwagen mit Fahrerhäusern unterschiedlicher Längen-, Breiten- und Höhenabmessungen mit einer allen Baureihen einheitlichen Fahrerhaus-Tür und dazu angepaßten Fahrerhausteilen, wie Fahrerhaus-Vorderwand, Fahrerhaus-Rückwand, Fahrerhaus-Seitenteilen und Dachaufsatz, wobei Fahrerhaus-Tür und Fahrerhaus-Seitenteile in allen Varianten einstückig aus einem Grundkörper gefertigt sind.

Aus der DE 34 29 880 A1 ist ein Personenkraftwagen bekannt, bei dem das Dach als vormontiertes Modul ausgebildet ist und mit der Karosserie durch Schnappverschlüsse verschließbar verbunden werden kann.

Der Erfindung liegt die Aufgabe zugrunde, verschiedene Fahrerhauskonzepte unterschiedlicher Ausführungen in einem weiten Teilbereich mit geringstem Fertigungs- und Montageaufwand herstellen zu können.

Dies wird erfindungsgemäß dadurch erreicht, daß die Fahrerhaus-Seitenwände und die Fahrerhaus-Rückwand im Anschlußbereich des Dachaufsatzes als ein auf drei Seiten umlaufender, die Dachaufsatzzone versteifender Profilrahmen ausgebildet sind, wobei der Profilrahmen auf der Fahrerhaus-Vorderwandseite durch einen separaten Profilbügel allseitig geschlossen ist, der mit den Vorderwandsäulen fest verbunden oder in mit den Vorderwandsäulen fest verbundenen, diese verstärkenden Rohre oder Profile einsteckbar ist. Solcherart sind Fahrerhäuser verschiedener Konfiguration in Bezug auf Stilistik, Gesamthöhe und Gesamtbreite mit unterschiedlich hohen und/oder breiten Windschutzscheiben bei geringstem Lageraufwand und Montage herstellbar. Die Gestaltung von Dachanschlüssen bzw. deren Anbindung in den verschiedenen Konfigurationen ist somit möglich, ohne die Windschutzscheiben-Situation zu beeinflussen. Sehr wichtig ist auch, daß bei allen Fahrerhaus-Vorderwandvarianten mit Profilbügel die für die jeweilige Struktur im Hinblick auf die Dachlastprüfung, Überrollfestigkeit, Frontalstoß bzw. Pendelschlag geforderte Festigkeit erzielt wird, wobei auch in vorteilhafter Weise die Breite der sichtverdeckenden Säulen reduziert werden kann.

Gemäß einem Ausführungsbeispiel ist für eine Gruppe von Baureihen ein geschlossener Dachrahmen als Verbindungsteil zur Fahrerhaus-Vorderwand, Fahrerhaus-Rückwand, den Fahrerhaus-Seitenteilen und den Dachaufsätzen mit einer durch den Dachrahmen höhenbegrenzten, vom Dachaufsatz unabhängigen Windschutzscheibe vorgesehen. Der geschlossene Dachrahmen ist ein wesentliches Anbindungsteil für die übrigen Fahrerhaus-Konponenten, insbesondere für die verschiedenen Dachaufsätze. Da der Dachrahmen geschlossen ist, ist eine von den unterschiedlichen Dachaufsätzen unabhängige Windschutzscheibe einbaubar.

Nach einer alternativen Ausbildung der Erfindung ist für eine Gruppe von Baureihen ein nach vorne offener Dachrahmen als Verbindungsteil zur Fahrerhaus-Vorderwand, Fahrerhaus-Rückwand, den Fahrerhaus-Seitenteilen und den Dachaufsätzen vorgesehen, wobei der Windschutzscheiben-Ausschnitt von Fahrerhaus-Vorderwand, dem offenen Dachrahmen und dem entsprechend ausgeschnittenen Dachaufsatz gebildet wird und somit den Einbau verschieden hoher Windschutzscheiben mit oder ohne Windschutzscheiben-Rahmen ermöglicht.

In weiterer Ausgestaltung der Erfindung kann der Dachaufsatz auf seiner Vorderseite im oberen Bereich zur Aufnahme der Windschutzscheibe mit einer entsprechenden Profilierung versehen sein, oder aber der Profilbügel weist die die Windschutzscheibe fassende Profilierung auf. Dies sind zweckmäßige die Wirtschaftlichkeit und Montage positiv beeinflussende Gesichtspunkte.

Eine große Anzahl von Fahrerhaus-Varianten ergibt sich aus fünf verschiedenen Dachaufsätzen, nämlich einem niedrigen Dach, einem mittelhohen Dach, einem hohen Dach für Schlafkabinenfahrerhäuser, einem Hochdach mit integrierter hoher Windschutzscheibe und einem Dachspoileraufsatz mit/ohne integrierten Staukästen.

In weiterer wesentlicher Ausgestaltung der Erfindung ist die Fahrerhaus-Tür in allen Varianten, im wesentlichen bestehend aus einem Tür-Außenteil und einem Tür-Innenteil, in einstückiger Ausbildung und einheitlichem Erscheinungsbild aus dem gleichen Grundkörper gefertigt und zwar sowohl ohne Radausschnitt für hohe Fahrerhaus-Bauarten und/oder geradem Boden, als auch mit Radausschnitt für niedrige Fahrerhaus-Bauarten und/oder Fahrerhausboden mit Motor-/Kühler-/Getriebetunnel.

Die modularen Seitenwände weisen im Tür- und Radkastenbereich, aus gleichem Grundkörper gefertigt, in einstückiger Ausbildung - mit oder ohne Radausschnitt - ein einheitliches Erscheinungsbild auf. Hierdurch ergeben sich wesentliche technische und ökonomische Vorteile, die darin liegen, daß die in ihren Umrißformen außen unterschiedlichen Türen und Seitenwände einteilig sind, so daß auf die Applikation von Zusatzteilen aller Art, wie bisher konventionell notwendig, verzichtet werden kann. Die Fertigung kann dabei so ablaufen, daß aus einem Grundkörper, dem die Tür oder Seitenwand mit der größten Höhe zugrunde liegt, durch anschließende Folgeoperationen, wie zum Beispiel Beschneiden und Abkanten, alle Module der diversen Baureihen hergestellt werden können.

Die Erfindung ist in mehreren Ausführungsbeispielen dargestellt und beschrieben.

Es zeigen:
- Fig. 1: Fahrerhaus mit normaler Länge und niedrigem Dach,
- Fig. 2: Fahrerhaus mit normaler Länge und mittelhohem Dach,
- Fig. 3: Fahrerhaus mit normaler Länge und hohem Dach für Schlafkabine,
- Fig. 4: Fahrerhaus mit normaler Länge und Hochdach mit integrierter, hoher Windschutzscheibe,
- Fig. 5: Fahrerhaus mit normaler Länge und Dachspoileraufsatz mit integrierten Staukästen,
- Fig. 6: Fahrerhaus mit großer Länge und niedrigem Dach,
- Fig. 7: Fahrerhaus mit großer Länge und mittelhohem Dach,
- Fig. 8: Fahrerhaus mit großer Länge und hohem Dach für Schlafkabine,
- Fig. 9: Fahrerhaus mit großer Länge und Hochdach mit integrierter, hoher Windschutzscheibe,
- Fig. 10: Fahrerhaus mit großer Länge und Dachspoileraufsatz mit/ohne integrierten Staukästen,
- Fig. 11: Fahrerhausaufbau mit normaler Windschutzscheibe in der Perspektive,
- Fig. 12: Fahrerhausaufbau mit normaler Windschutzscheibe in der Explosivperspektive,
- Fig. 13: Fahrerhausaufbau mit hoher Windschutzscheibe in der Perspektive,
- Fig. 14: Fahrerhausaufbau mit hoher Windschutzscheibe in der Explosivperspektive,
- Fig. 15: Fahrerhaus-Grundkörper in der Perspektive,
- Fig. 16: Perspektivische Darstellung, niedriges Dach mit niedriger Windschutzscheibe,
- Fig. 17: Perspektivische Darstellung, hohes Dach mit hoher Windschutzscheibe,
- Fig. 18: Schnitt A-A nach Fig. 15,
- Fig. 19: Schnitt A-A nach Fig. 15 in einer Variante,
- Fig. 20: Schnitt B-B nach Fig. 15,
- Fig. 21: Schnitt B-B nach Fig. 15 in einer Variante,
- Fig. 22: Seitenwand eines Fahrerhauses mit Tür,
- Fig. 23: Einzelheit von Fig. 22 gemäß Schnitt C-C,
- Fig. 24: Einzelheit von Fig. 22 gemäß Schnitt C-C in einer Variante.

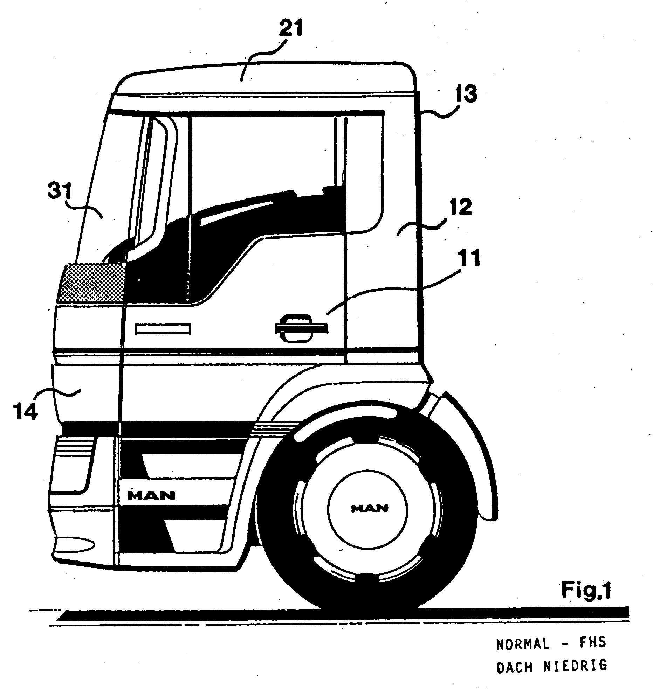

Fig. 1 zeigt die Fahrerhaus-Baureihe 1 mit den an der Fahrerhaus-Tür 11 anschließenden kurzen Fahrerhaus-Seitenteilen 12, der Fahrerhaus-Rückwand 13 und der Fahrerhaus-Vorderwand 14, dem niedrigen Dachaufsatz 21 und der Standardwindschutzscheibe 32.

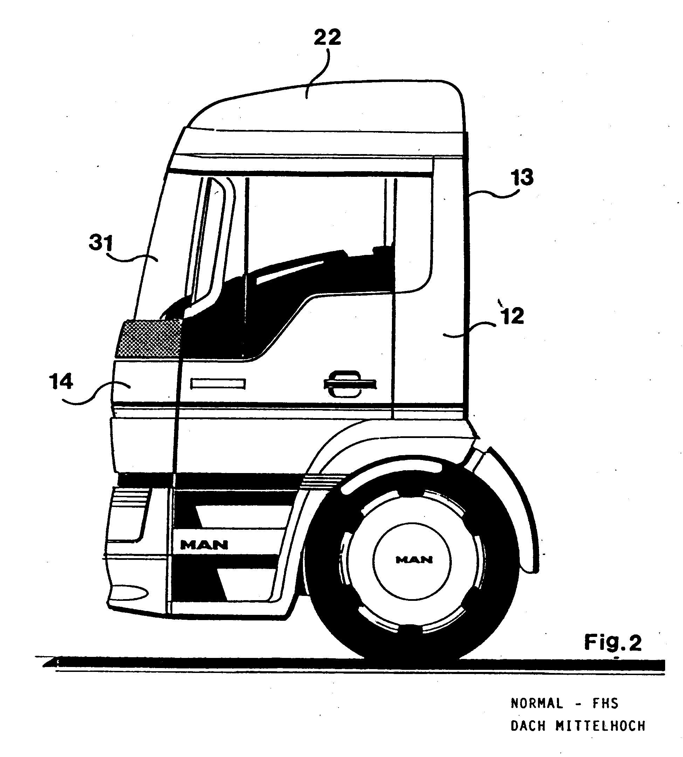

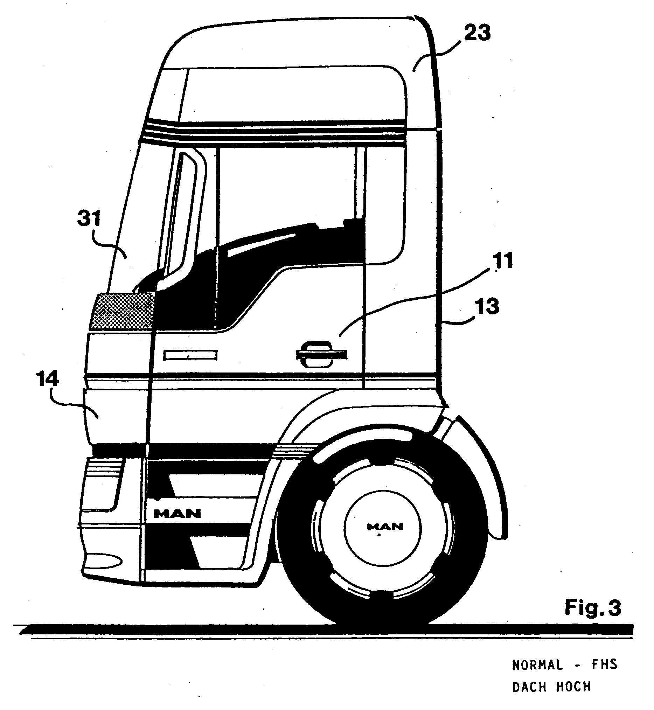

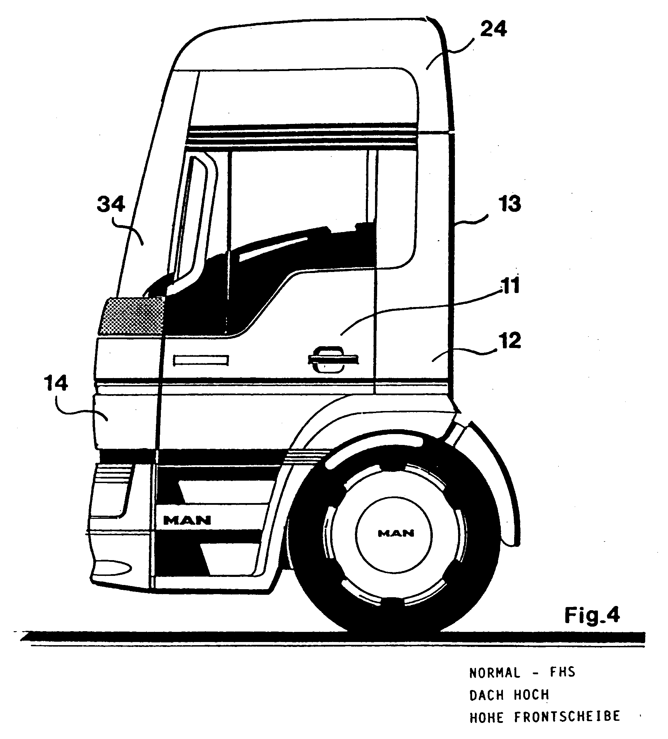

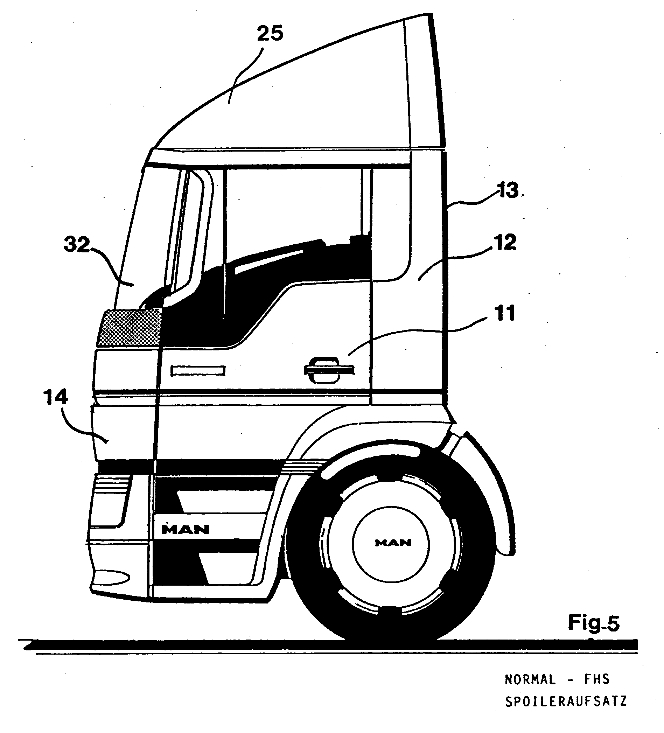

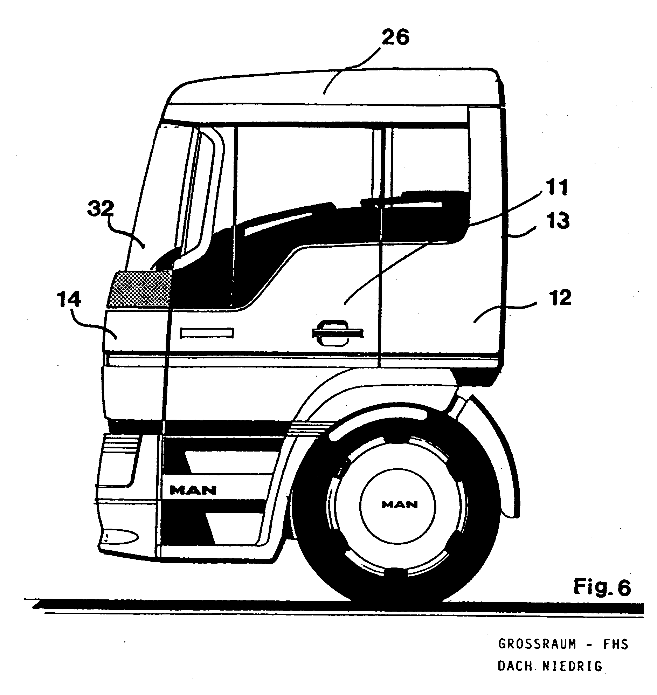

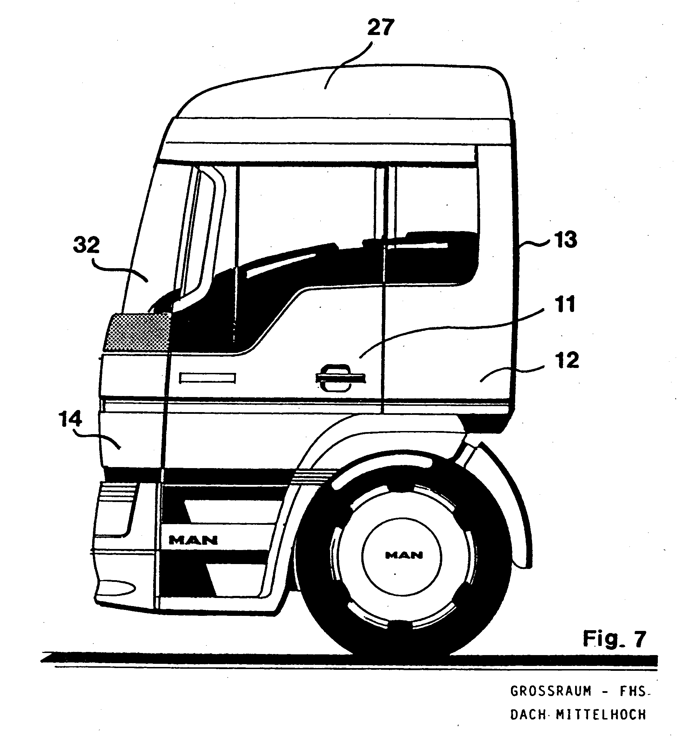

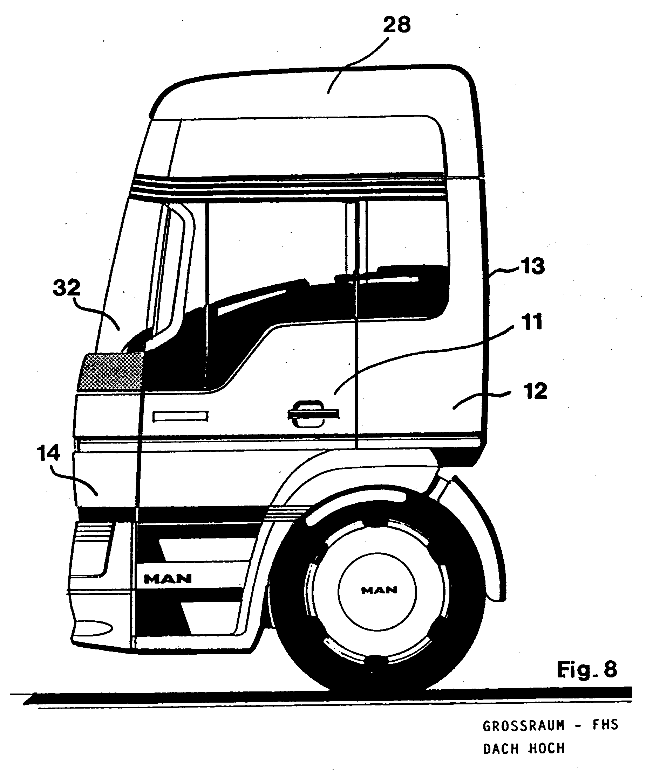

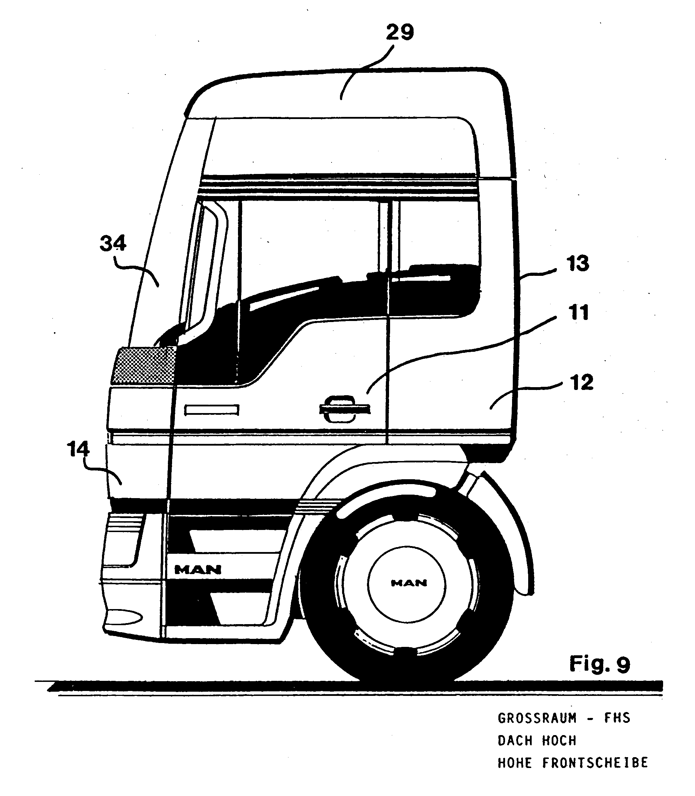

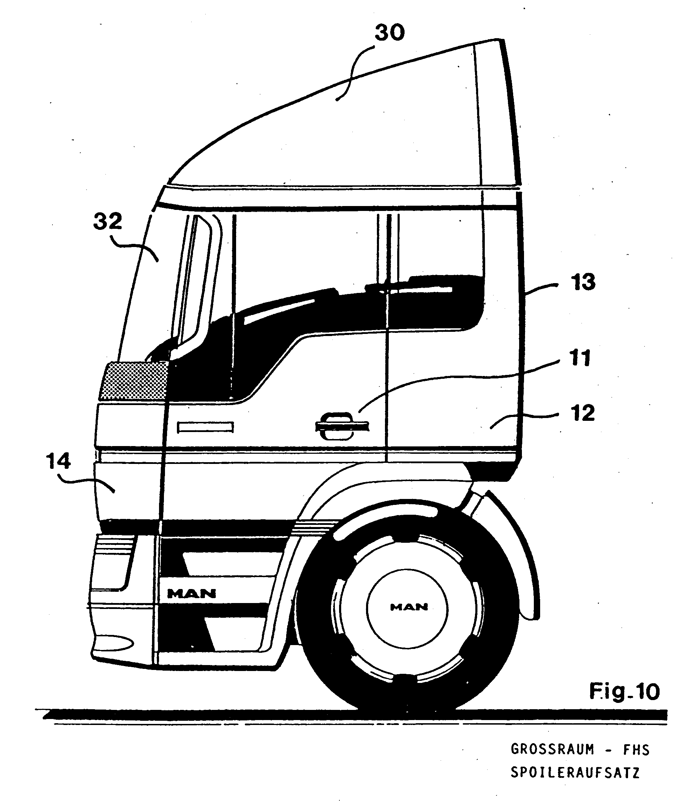

Die Fahrerhaus-Baureihe 2 gemäß Fig. 2 entspricht weitgehend der Baureihe 1 nach Fig. 1 bis auf den mittelhohen Dachaufsatz 22, wie auch die Fahrerhaus-Baureihe 3 gemäß Fig. 3 sich ebenfalls nur durch den Dachaufsatz 23 in seiner hohen Ausbildung unterscheidet. Die Fahrerhaus-Baureihe 4 gemäß Fig. 4 weist eine wesentlichere Unterscheidung gegenüber den vorbeschriebenen Baureihen 1 bis 3 auf, nämlich ein Hochdach 24, und was besonders wesentlich ist, eine hohe Windschutzscheibe 34, die besondere Rahmenbauteile, wie später geschildert, erfordert. Die Fahrerhaus-Baureihe 5 gemäß Fig. 5 unterscheidet sich von den vorhergehenden lediglich wieder durch den unterschiedlichen Dachaufbau 25, der als Dachspoileraufsatz mit/ohne integrierten Staukästen gebildet ist. Die Fahrerhaus-Baureihen 6 bis 10 gemäß den Fig. 6 bis 10 sind als Großraumvariante zu den vorbeschriebenen Fahrerhaus-Baureihen 1 bis 5 konzipiert und unterscheiden sich von diesen lediglich durch die verlängerte Seitenwand 12 sowie durch eine Verlängerung der jeweiligen Dachaufsätze.

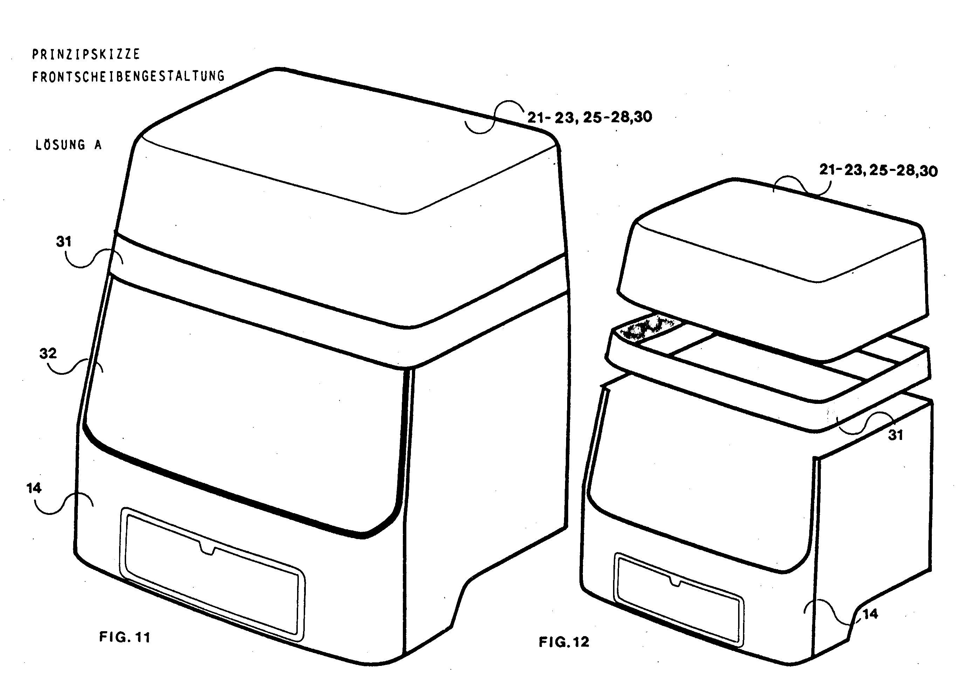

Aus den Fig. 11 bis 14 ist die unterschiedliche Einbindung der verschieden hohen Frontscheiben in das Gesamtkonzept des Fahrerhauses zu entnehmen. Dabei zeigt Fig. 11 eine perspektivische Darstellung und Fig. 12 eine explosivperspektivische Darstellung des Fahrerhauses mit niedriger Windschutzscheibe 32. Es ist hier ein geschlossener Dachrahmen 31 vorgesehen, der die verschiedenen Dachaufsätze 21 bis 23, 25 bis 28 und 30 an die übrigen Rahmenteile anbindet.

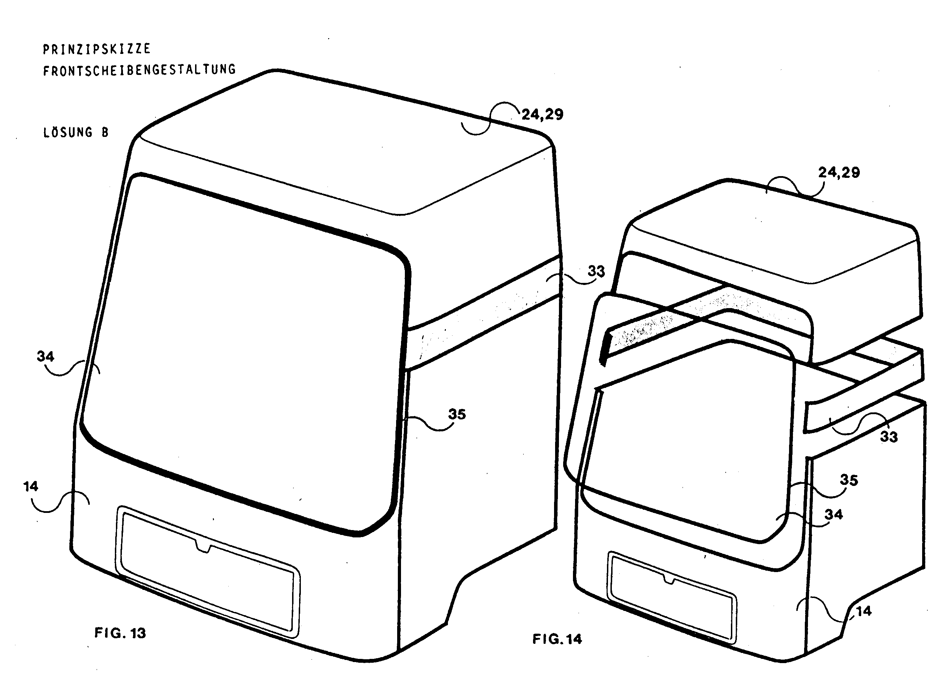

Die Fig. 13 zeigt eine perspektivische und die Fig. 14 eine explosiv-perspektivische Darstellung der Fahrerhäuser mit hoher Windschutzscheibe 34. Hier ist ein offener Dachrahmen 33 vorgesehen, der die übrigen Teile an die Dachaufbauten 24, 29 anbindet, wobei, in Eigenart dieser Ausführungsvariante eine hohe Windschutzscheibe 34 vorgesehen ist, die bis hoch in die Dachaufbauten hineinreicht. Die Windschutzscheibe 34 ist dabei in einem Frontscheiben-Rahmen 35 eingefaßt, der wiederum von den Bauteilen 24, (29), 33 und 14 umfaßt ist.

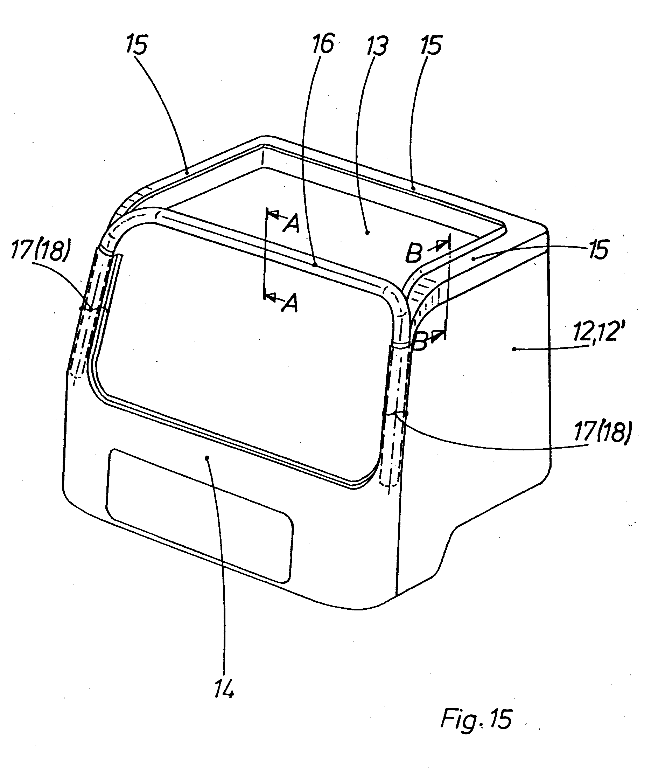

Eine besonders wesentliche und praxisrelevante Ausführungsform der Erfindung wird in der Fig. 15 gezeigt. Der Fahrerhaus-Grundkörper, im wesentlichen bestehend aus den Fahrerhaus-Seitenteilen 12, der Fahrerhaus-Rückwand 13 und der Fahrerhaus-Vorderwand 14, weist im Anschlußbereich des Dachaufsatzes einen auf drei Seiten umlaufenden, die Dachaufsatzzone versteifenden Profilrahmen 15 auf, der als Kastenprofil ausgebildet ist. Der Profilrahmen 15 wird durch Biege- und Kantvorgänge an den oberen Enden der Rückwand und der Seitenteile gebildet und an den Nahtstellen miteinander, zum Beispiel durch Schweißen, verbunden. Der Profilrahmen 15 ist zur Fahrzeug-Vorderwand hin offen. Er wird, auch in Festigkeitshinsicht, durch einen Profilbügel 16 geschlossen, der mit den Vorderwandsäulen 17 fest verbunden ist, wobei es auch möglich ist, die Säulen 17 durch Rohre oder Profile 18 zu verstärken und den Profilbügel in die Rohre bzw. Profile hineinzustecken, so daß auch die Höhe des Bügels in Anpassung zum Profilrahmen problemlos zu variieren ist.

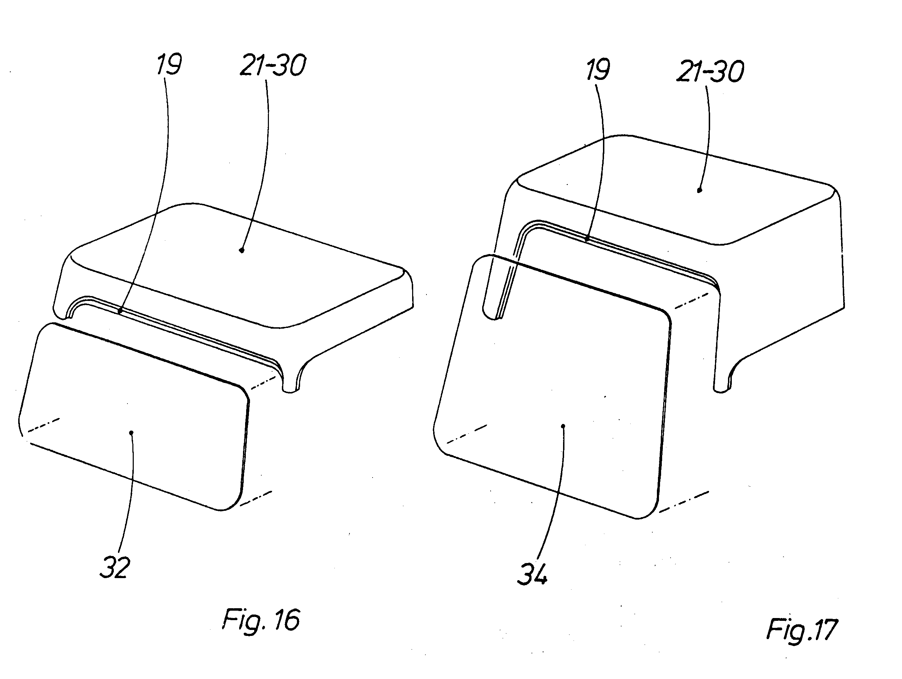

Die Fig. 16 und 17 zeigen unterschiedliche Dachaufsätze 21 bis 30 mit im vorderen Bereich integriertem Profil für die Aufnahme der Windschutzscheiben 32 oder 34.

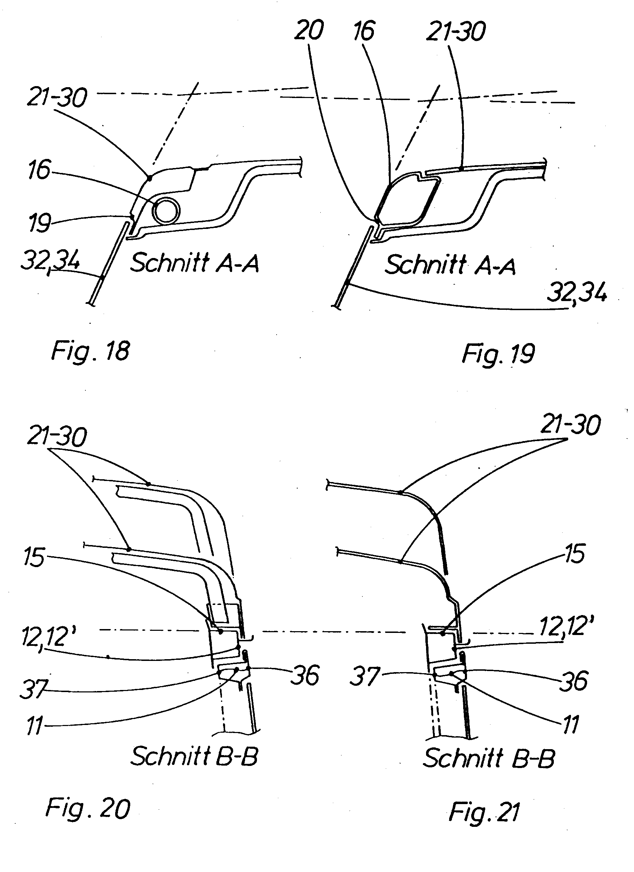

Aus den Fig. 18 und 19 sind Einzelheiten in der Zuordnung der Dachaufsätze zu der Aufnahme der Windschutzscheiben gemäß Schnitt A-A der Fig. 15 zu entnehmen. Nach Fig. 18 ist der Dachaufsatz 21 bis 30 in seinem vorderen Bereich solcherart mit einem Profil 19 versehen, daß darin die Windschutzscheibe 32, 34 gefaßt werden kann. Im Eckbereich des Dachaufsatzes, unterhalb von diesem, verläuft der Profilbügel 16. Nach Fig. 19 ist der Profilbügel 16 mit einem Profil 20 zur Aufnahme der Windschutzscheiben 32, 34 versehen und der Dachaufsatz 21 bis 30 taucht in ein oberes Profil des Profilbügels 16 ein.

Die Fig. 20 und 21 zeigen Einzelheiten in der Zuordnung von Tür, Dachaufsatz und Rahmen des Grundkörpers gemäß Schnitt B-B der Fig. 15. Das Seitenteil 12 ist an seinem oberen Ende als kastenförmiger Profilrahmen 15 ausgebildet, auf dessen oberer Seite der Dachaufsatz 21 bis 30 aufliegt, der mit dem Rahmen entweder lösbar durch Schrauben oder unlösbar durch Schweißen, Nieten oder Kleben verbunden ist. Im unteren Bereich des Profilrahmens 15 ist die Fahrerhaus-Tür 11 angeordnet, die im wesentlichen aus einem Tür-Außenteil 36 und einem Tür-Innenteil 37 gebildet ist.

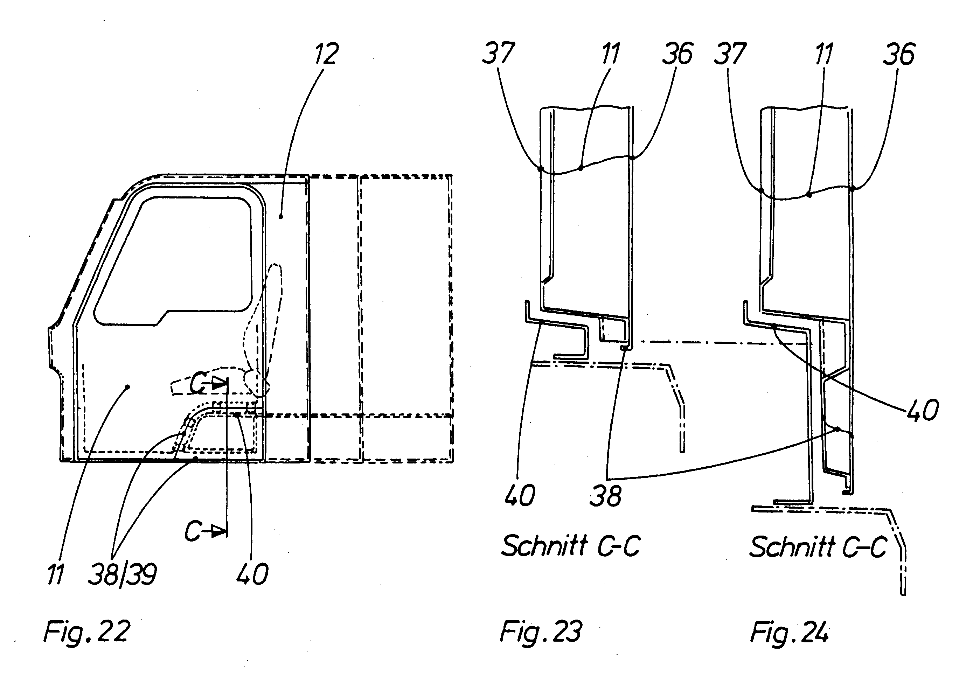

Die Fig. 22 zeigt auf, wie die erfindungsgemäßen Fahrerhäuser im Radkastenbereich ausgebildet sind. In den Seitenwänden 12, die je nach Fahrerhauslänge, ein unterschiedliches Maß aufweisen können, sind die Fahrerhaus-Türen 11 eingesetzt, die, wie auch die Fahrerhaus-Seitenteile 12 aus einem einzigen Grundkörper gebildet werden, der je nach Fahrerhaushöhe und anderen Modalitäten, wie Fahrerhausbodenbeschaffenheit entsprechend den jeweiligen Verhältnissen ausgebildet werden kann.

Aus den Fig.23 und 24 sind gemäß Schnitt C-C der Fig. 22 unterschiedliche, aus einem Grundkörper entstandene Tür- und Seitenwandformen zu ersehen, wobei die Tür 11 und der untere Teil der Seitenwand gemäß Fig. 24 als Ausgangsprodukt zu verstehen ist, das bei gegebener Forderung auf die Verhältnisse gemäß Fig. 23 verkürzt ausgebildet werden kann. Die Fahrerhaus-Tür 11 besteht im wesentlichen aus dem Tür-Außenteil 36 und dem Tür-Innenteil 37 mit konstanter Radbügelform ohne Radausschnitt (z.B. bei hoher Bauart) oder mit Radausschnitt nach durchgeführter Verkürzung (z.B. bei niedriger Bauart). Die Seitenwand beinhaltet grundsätzlich einen konstanten Türausschnitt mit entsprechender Radbügeleinpressung. Bei Bedarf wird der Radausschnitt für niedrige Bauart durch entsprechende Folgeoperationen ausgeführt.

## Patentansprüche

1. Fahrerhaus-Baureihen modularen Aufbaus bei Lastkraftwagen mit Fahrerhäusern unterschiedlicher Längen-, Breiten- und Höhenabmessungen mit einer allen Baureihen einheitlichen Fahrerhaus-Tür und dazu angepaßten Fahrerhausteilen, wie Fahrerhaus-Vorderwand, Fahrerhaus-Rückwand, Seitenteile und Dachaufsatz, wobei Fahrerhaus-Tür (11) und Fahrerhaus-Seitenteile (12) in allen Varianten einstückig aus einem Grundkörper gefertigt sind, dadurch gekennzeichnet, daß die verschiedenen Dachaufsätze (21 bis 30) wahlweise, mit oder ohne Zwischenteile (31, 33) lösbar oder nicht lösbar, mit dem einheitlichen Fahrerhaus-Grundkörper (11, 12, 13, 14) verbindbar sind, und daß die Fahrerhaus-Seitenwände (12) und die Fahrerhaus-Rückwand (13) im Anschlußbereich des Dachaufsatzes (21 bis 30) als ein auf drei Seiten umlaufender, die Dachaufsatzzone versteifender Profilrahmen (15) ausgebildet sind und der Profilrahmen (15) auf der Fahrerhaus-Vorderwandseite (14) durch einen separaten Profilbügel (16) allseitig geschlossen ist, der mit den Vorderwandsäulen (17) fest verbunden oder in mit den Vorderwandsäulen (17) fest verbundenen diese verstärkenden Rohre/Profile (18) einsteckbar ist.

2. Fahrerhaus-Baureihen nach Anspruch 1, dadurch gekennzeichnet, daß für eine Gruppe von Baureihen ein geschlossener Dachrahmen (31) als Verbindungsteil zur Fahrerhaus-Vorderwand (14), Fahrerhaus-Rückwand (13), den Seitenteilen (12, 12') und Dachaufsätzen (21 bis 23, 25 bis 28 und 30) mit einer durch den Dachrahmen (31) höhenbegrenzten, vom Dachaufsatz (21 bis 30) unabhängigen Windschutzscheibe (32) vorgesehen ist.

3. Fahrerhaus-Baureihen nach Anspruch 1, dadurch gekennzeichnet, daß für eine Gruppe von Baureihen ein nach vorn offener Dachrahmen (33) als Verbindungsteil zu Fahrerhaus-Vorderwand (14), Fahrerhaus-Rückwand (13), Seitenteilen (12, 12') und Dachaufsätzen (24 und 29) vorgesehen ist und zwischen Fahrerhaus-Vorderwand (14), offenem Dachrahmen (30) und Dachaufsatz (24, 29) eine mit einem Windschutzscheiben-Rahmen (35) versehene hohe Windschutzscheibe (34) eingefaßt ist.

4. Fahrerhaus-Baureihen nach Anspruch 1, dadurch gekennzeichnet, daß der Dachaufsatz (21 bis 30) auf seiner Vorderseite im oberen Bereich zur Aufnahme der Windschutzscheibe (32, 34) mit einem entsprechenden Profil (19) versehen ist.

5. Fahrerhaus-Baureihen nach Anspruch 1, dadurch gekennzeichnet, daß der Profilbügel (16) in seinem oberen Bereich zur Aufnahme der Windschutzscheibe (32, 34) mit entsprechendem Profil (20) versehen ist.

6. Fahrerhaus-Baureihen nach den Ansprüchen 1 bis 5, dadurch gekennzeichnet, daß der die Fahrerhaus-Vorderwand (14) schließende und stabilisierende Profilbügel (16) und der im Dachaufsatz (21 bis 30) integrierte Teil des Windschutzscheibenrahmens in unterschiedlichen Höhen gebildet werden kann.

7. Fahrerhaus-Baureihen nach einem oder mehreren der Ansprüche 1 bis 6, dadurch gekennzeichnet, daß als Dachaufsätze (21 bis 30), komplett vormontiert, folgende Ausführungen vorgesehen sind:
- Dach niedrig (21, 26)
- Dach mittelhoch (22, 27)
- Dach hoch, für Schlafkabine (23, 28)
- Hochdach mit integrierter hoher Windschutzscheibe (24, 29)
- Dachspoileraufsatz mit/ohne integrierten Staukästen (25, 30).

8. Fahrerhaus-Baureihen, insbesondere nach Anspruch 1, dadurch gekennzeichnet, daß die Fahrerhaus-Tür (11) im wesentlichen aus einem Tür-Außenteil (36) und einem Tür-Innenteil (37) mit konstanter Radbügelform ohne (z.B. bie hoher Bauart) oder mit Radausschnitt nach durchgeführter Verkürzung (z.B. bei niedriger Bauart) besteht und in einstückiger Ausbildung und einheitlichem Erscheinungsbild stets aus dem gleichen Grundkörper gefertigt ist.

9. Fahrerhaus-Baureihen nach Anspruch 8, dadurch gekennzeichnet, daß die Seitenwand (12) einen konstanten Türausschnitt (40) mit entsprechender Radbügeleinpressung aufweist, wobei bei Bedarf (z.B. bei niedriger Fahrerhaus-Bauart) der Radausschnitt durch entsprechende Folgeoperationen hergestellt wird.

10. Fahrerhaus-Baureihen nach Anspruch 1 oder 8, dadurch gekennzeichnet, daß die modularen Seitenwände (12) in Tür- und Radkastenbereich, aus dem gleichen Grundkörper gefertigt, eine einstückige Ausbildung - mit oder ohne Radausschnitt (39) - und ein einheitliches Erscheinungsbild aufweisen.

11. Fahrerhaus-Baureihen nach Anspruch 9, dadurch gekennzeichnet, daß die Seitenwand-Radbügelform (39) sowie der Türenausschnitt (40) in der Seitenwand einteilig und aus einem Grundkörper gefertigt sind.

## Claims

1. Cab model ranges of modular design for trucks with cabs of different lengths, widths, heights, with a cab door that is uniform for all model ranges and cab components adjusted to it such as the cab front wall, cab rear wall, lateral parts and roof cap, the cab door (11) and cab lateral parts (12) in all variants being manufactured as a single piece from a basic body, characterised in that the different roof caps (21 to 30) can, optionally with or without intermediate parts (31, 33), be detachably or non-detachably connected with the uniform cab basic body (11, 12, 13, 14), and that the cab lateral walls (12) and the cab rear wall (13) are, in the area of the connection to the roof cap (21 to 30), formed as a sectional frame (15) that is continuous on three sides, reinforces the roof cap zone and is closed on all sides by a separate sectional bow (16) on the cab front wall (14), which bow is firmly connected with the front wall columns (17) or can be plugged into tubes/sections (18) firmly connected with and reinforcing the front wall columns (17).

2. Cab model ranges according to Claim 1, characterised in that for a group of model ranges a closed roof frame (31) is provided as connecting part to the cab front wall (14), cab rear wall (13), the lateral parts (12, 12') and roof caps (21 to 23, 25 to 28 and 30) with a windscreen (32) being limited in height by the roof frame (31) and independent of the roof cap (21 to 30).

3. Cab model ranges according to Claim 1, characterised in that for a group of model ranges a roof frame (33) open towards the front is provided as connecting part to the cab front wall (14), cab rear wall (13), lateral parts (12, 12') and roof caps (24 and 29), and that a high windscreen (34) provided with a windscreen frame (35) is fitted between the cab front wall (14), open roof frame (30) and roof cap (24, 29).

4. Cab model ranges according to Claim 1, characterised in that the roof cap (21 to 30) is provided with a suitable section (19) on the front side in the upper area for holding the windscreen (32, 34).

5. Cab model ranges according to Claim 1, characterised in that the sectional bow (16) is provided with a suitable section (20) in its upper area for holding the windscreen (32, 34).

6. Cab model ranges according to the Claims 1 to 5, characterised in that the sectional bow (16) closing and stabilising the cab front wall (14) and that part of the windscreen frame integrated into the roof cap (21 to 30) can be of different heights.

7. Cab model ranges according to one or several of the Claims 1 to 6, characterised in that the following versions can be provided as completely pre-assembled roof caps (21 to 30):
- Roof low (21, 26)
- Roof medium-height (22, 27)
- Roof high, for sleeper (23, 28)
- Space cab with integrated high windscreen (24, 29)
- Roof spoiler cap with/without integrated storage compartments (25, 30).

8. Cab model ranges, particularly according to Claim 1, characterised in that the cab door (11) consists basically of a door outer part (36) and a door inner part (37) with a constant wheel bow form without (eg in high-mounted versions) or with a wheel cutout after the shortening has been completed (eg in low-mounted versions) and is always manufactured of the same basic body as a single piece and of uniform appearance.

9. Cab model ranges according to Claim 8, characterised in that the lateral wall (12) is provided with a constant door cutout (40) with corresponding wheel bow impression, the wheel cutout being produced in a suitable follow-up operation as required (eg for low cab designs).

10. Cab model ranges according to Claim 1 or 8, characterised in that the modular lateral walls (12) in the door and wheelcase area are manufactured of the same basic body, designed as a single piece - with or without wheel cutout (39) - and of uniform appearance.

11. Cab model ranges according to Claim 9, characterised in that the lateral wall wheel bow form (39) and the door cutout (40) in the lateral wall are manufactured as a single piece and of one basic body.

## Revendications

1. Système modulaire de réalisation d'une gamme de cabines de conduite de véhicules utilitaires, présentant des longueurs, largeurs et hauteurs différentes, utilisant une même porte à laquelle sont adaptées d'autres parties de la cabine, telles que la façade avant, le panneau arrière, les panneaux latéraux et la calotte de couverture, la porte (11) et les panneaux latéraux (12), dans toutes leurs variantes, étant fabriqués chacun en une seule pièce à partir d'un élément de base, système caractérisé en ce que :
- les différentes calottes de toit (31 à 30) peuvent, au choix, être reliées à l'ensemble (11, 12, 13, 14) constituant le corps de base de la cabine, directement ou par des pièces intermédiaires, de manière amovible ou non,
- les panneaux latéraux (12) et le panneau arrière (13) de la cabine forment, au niveau de leur raccordement à la calotte de toit (21 à 30) un cadre profilé (15) entourant la calotte sur trois côtés et la rigidifiant,
- du côté de la façade (14), le cadre (15) est fermé par un étrier profilé (16) rendu solidaire des pieds avant (17) ou emmanché dans des profilés tubulaires (18) solidaires de ces pieds (17) qu'ils renforcent.

2. Système modulaire selon la revendication 1, caractérisé en ce qu'il prévoit, pour un groupe de la gamme, un cadre de toit fermé (31) servant d'élément de liaison entre la façade (14), le panneau arrière (13), les panneaux latéraux (12, 12') et les calottes de toit (21 à 23, 25 à 28, 30), le pare-brise (32) limité en hauteur par le cadre (31) étant indépendant de la calotte de toit (21 à 30).

3. Système modulaire selon la revendication 1, caractérisé en ce qu'il prévoit, pour un groupe de la gamme, un cadre de toit (33) ouvert à l'avant, servant d'élément de liaison entre la façade (14), le panneau arrière (13), les panneaux latéraux (12, 12') et les calottes de toit (24 et 29), un pare-brise (34) de grande hauteur, entouré d'un cadre (35), étant monté entre la façade (14), le cadre ouvert (30) et la calotte (24, 29).

4. Système modulaire selon la revendication 1, caractérisé en ce que la calotte de toit (21 à 30) est munie, en avant, au niveau du bord supérieur du pare-brise (32,34) d'une partie profilée (19) prévue pour recevoir celui-ci.

5. Système modulaire selon la revendication 1, caractérisé en ce que l'étrier profilé (16) présente au niveau du bord supérieur du pare-brise (32,34) une partie profilée (20) prévue pour recevoir celui-ci.

6. Système modulaire selon les revendications 1 à 5, caractérisé en ce que l'étrier profilé (16) fermant et renforçant la façade avant (14) et la partie du cadre du pare-brise intégré à la calotte (21 à 30), peuvent être réalisés selon des hauteurs différentes.

7. Système modulaire selon l'une ou plusieurs des revendications 1 à 6, caractérisé en ce qu'il prévoit, en ce qui concerne les calottes de toit (21 à 30), les réalisations entièrement préfabriquées suivantes :
- toit bas (21, 26),
- toit de hauteur moyenne (22, 27),
- toit de grande hauteur, pour cabine à couchette (23, 28),
- toit de grande hauteur avec grand pare-brise (24, 29) intégré,
- toit déflecteur avec ou sans caisson (25, 30) intégré.

8. Système modulaire, en particulier selon la revendication 1, caractérisé en ce que la porte (11) de la cabine est constituée d'une partie externe (36) et d'une partie interne (37) toujours équipée d'un même arceau de passage de roue sans (par exemple en réalisation haute) ou avec découpe obtenue par raccourcissement ultérieur (par exemple en réalisation basse), cette porte étant toujours fabriquée sous la forme d'une seule pièce assemblée, d'aspect continu, à partir des mêmes éléments de base.

9. Système modulaire selon la revendication 8, caractérisé en ce que la paroi latérale (12) présente toujours une même partie (40) sous la forme d'un embout correspondant à l'arceau de roue de la porte, la découpe de passage de roue, si besoin est (par exemple pour une cabine basse) étant réalisée par des opérations complémentaires.

10. Système modulaire selon la revendication 1 ou 8, caractérisé en ce que les panneaux latéraux modulaires (12), réalisés à partir du même éléments de base, se présentent, au niveau de la porte et du caisson de roue, sous la forme d'une seule pièce assemblée, avec ou sans découpe (39) de passage de roue et sans discontinuité d'aspect.

11. Système modulaire selon la revendication 9, caractérisé en ce que la paroi latérale correspondant à l'étrier de roue (39) formée dans la paroi latérale, ainsi que la découpe de porte (40) sont une même pièce réalisée à partir d'un même élément de base.
